# EUROPÄISCHE PATENTSCHRIFT

(11) **EP 0 561 816 B1**
(45) Veröffentlichungstag und Bekanntmachung des Hinweises auf die Patenterteilung: **24.08.1994**
(21) Anmeldenummer: 91920220.0
(22) Anmeldetag: 26.11.1991
(51) Int. Cl.: B62D 25/08, B62D 29/00, B62D 27/06

(54) **VERSTÄRKUNG EINES BLECHTEILS, INSBESONDERE AN EINER FAHRZEUGKAROSSERIE**
REINFORCEMENT OF A SHEET METAL COMPONENT, ESPECIALLY IN VEHICLE BODYWORK
RENFORCEMENT D'UNE PIECE EN TOLE, NOTAMMENT DANS UNE CARROSSERIE AUTOMOBILE

(30) Priorität: 20.12.1990 DE 4040958
(43) Veröffentlichungstag der Anmeldung: 29.09.1993
(73) Patentinhaber: AUDI AG, 85002 Ingolstadt (DE)
(72) Erfinder: ENNING, Norbert, D-8071 Denkendorf (DE); RINKE, Klaus, Peter, D-8071 Wettstetten (DE); TIMM, Heinrich, D-8070 Ingolstadt (DE)
(74) Vertreter: Engelhardt, Harald
(86) Internationale Anmeldenummer: EP9102231
(87) Internationale Veröffentlichungsnummer: WO9211162

(56) Entgegenhaltungen:
- EP-A- 0 136 264
- DE-A- 1 268 439
- DE-A- 2 435 768
- DE-A-24 125 06
- PATENT ABSTRACTS OF JAPAN vol. 7, No. 250 (M-254)(1395) 8 November 1983 & JP,A,58 136 572 (NISSAN) 13 August 1983
- PATENT ABSTRACTS OF JAPAN vol. 13, No. 497 (M-889) 9 November 1989 & JP,A,1 197 182 (MAZDA) 8 August 1989

## Beschreibung

Die Erfindung betrifft eine Verstärkung eines Blechteils an einer Fahrzeugkarosserie nach dem Oberbegriff des Anspruchs 1.

Beim Aufbau von Fahrzeugkarosserien aus Blechteilen ist es an Stellen, an denen hohe Belastungen auftreten, oft erforderlich, die Blechteile zu verstärken. Dazu werden in diesen Bereichen weitere Blechteile als sog. Blechdoppelungen angeschweißt und flächige Umgebungen mit Sicken zur Aussteifung versehen.

Beispielsweise treten in einem Kraftfahrzeug an den hinteren Gurtanbindungspunkten im Belastungsfall hohe Spannungsspitzen auf. Diese Gurtanbindungspunkte liegen etwa im Bereich, wo die Bodenwanne zur hinteren Rücksitzschottwand ansteigt und an den hinteren Längsträger angrenzt. Für die erforderliche Verstärkung des einfachen Bodenwannenblechs an diesem Gurtanbindungspunkt ist es bekannt, Blechdoppelungen zu verwenden, die mit einem Mutternkäfig oder mit Schweißmuttern verbunden sind, an denen das Ende des Sicherheitsgurts bzw. ein Aufwickelautomat befestigt sind. Zusätzlich zu den Blechdoppelungen muß die flächige Umgebung mit Sicken für eine weitere Versteifung versehen werden.

Die Herstellung eines solchen verstärkten Gurtanbindungspunktes ist durch die erforderlichen mehreren Blechteile und die erforderlichen mehreren Schweißvorgänge sowie der notwendigen Sicken aufwendig. Außer der Verstärkung für die Gurtanbindung wird keine wesentliche Verbesserung der Steifigkeit oder des Schwingungsverhaltens der Karosserie an sich im verstärkten Bereich erhalten. Eine zusätzliche Befestigung weiterer Fahrzeugteile ist an den bekannten Blechdoppelungen nicht ohne weiteren Aufwand und weitere Maßnahmen möglich.

Es ist eine Verstärkung eines Blechteils an einer Fahrzeugkarosserie bekannt (PATENT ABSTRACTS OF JAPAN, vol. 7, no. 250 (M-254) (1395) 8. November 1983 & JP-A-58 136 572 (NISSAN) 13. August 1983), wo an einem Hohlprofilträger als Hecksäule ein zusätzliches Bauteil als Verstärkungsteil eingesteckt ist. Das Hohlprofil verläuft in einer ersten Raumrichtung gerade und weist nur Biegungen in den anderen beiden Raumrichtungen auf. Das Verstärkungsteil ist entsprechend dem Verlauf zweier Innenwände des Hohlprofilteils ausgebildet und liegt formschlüssig in einer gewissen Länge an diesen Innenwänden an. Durch Verschraubungen, über die zusätzliche Anbauteile mit dem Hohlprofil verbunden sind, wird auch das Verstärkungsteil mit dem Hohlprofil verbunden. Es handelt sich somit hier um eine konkrete Ausbildung einer eingangs erwähnten Blechdoppelung zur Aussteifung eines Hohlprofilträgers. Ein Hinweis auf eine Verstärkung einer Bodenwanne im Bereich eines hinteren Gurtanbindungspunkts ist nicht gegeben.

Weiter ist eine Kotflügelbank als Aluminium-Strangprofil bekannt (PATENT ABSTRACTS OF JAPAN, vol. 13, no. 497 (M-889) 9. November 1989 & JP-A-1 197 182 (MAZDA) 8. August 1989), bei dem zur Aufnahme einer Mutternplatte durch zwei gegenüberliegende Klauenprofile ein offener Haltekanal gebildet ist.

Weiter ist ein Profilstab mit einem offenen Haltekanal zum Einlegen von Mutternplatten bekannt (EP 0 136 264 A3).

Verstärkungsbleche und Verstärkungseinlagen in Hohlträgern sind zudem bekannt aus DE 2 435 768 A und DE 2 412 506 A. Die Anbringung solcher Verstärkungsbleche in Hohlprofilträgern ist wegen der schwierigen Handhabung und im fertigen Zustand der Karosserie geschaffenen Unzugänglichkeit schwierig und aufwendig.

Aufgabe der Erfindung ist es, eine Verstärkung eines Blechteils als Teil einer Bodenwanne eines Fahrzeugs im Bereich eines hinteren Gurtanbindungspunkts zu schaffen, wodurch mit einfachen Maßnahmen eine ausreichende Verstärkung des hinteren Gurtanbindungspunkts zusammen mit einer verbesserten Aussteifung dessen Umgebung und einer Verbesserung des Schwingungsverhaltens sowie verbesserter Crashfestigkeit bei einem Seitenaufprall erreicht wird.

Diese Aufgabe wird mit den Merkmalen des Anspruchs 1 gelöst.

Gemäß Anspruch 1 ist das zu verstärkende Blechteil ein Teil einer Bodenwanne eines Fahrzeugs im Bereich eines hinteren Gurtanbindungspunkts. Das Verstärkungsteil ist ein Strangprofilteil, bevorzugt ein Leichtmetall-Strangprofilteil, das als quer zum Fahrzeug verlaufender Querträger ausgebildet ist und der den Bodenwannenbereich untergreift. Das Strangprofilteil weist dazu im Querschnitt einen ersten geraden, plattenförmigen Profilteil auf, der etwa waagrecht unter dem Blechteil der Bodenwanne anliegt. Weiter weist das Strangprofilteil einen im Querschnitt nach oben abstehenden, zweiten Profilteil auf, der am Anstieg der Bodenwanne zum Rücksitz bzw. zum Kofferraum anliegt.

Damit wird der hintere Gurtanbindungspunkt für die im Belastungsfall hohen Spannungspitzen ausreichend verstärkt. Durch die großflächige Abstützung an der übrigen Blechstruktur werden bei günstiger Krafteinleitung die Spannungsspitzen gesenkt. Durch die Wirkung des Strangprofilteils als Querträger wird dessen gesamte Umgebung ausgesteift, was das Schwingungsverhalten und die Steifigkeit, insbesondere bei einem Seitenaufprall, verbessert. Durch die im Querschnitt winkelige Ausführung des Profilteils wird dessen Biegesteifigkeit erhöht und die Verstärkung und Abstützung erfolgt wirksam über eine Längskante.

Eine noch günstigere Ausführungsform wird mit den Merkmalen der Ansprüche 2 bis 4 erreicht, wobei eine weitere Abwinkelung durch einen dritten, plattenförmigen Profilteil erreicht wird und ein Haltekanal mit steifen Seitenwänden bevorzugt die gesamte Breite des zweiten Profilteils einnimmt. Dort kann eine entsprechend großflächig dimensionierte Mutternplatte eingeschoben und fixiert werden, wodurch auftretende Belastungen großflächig auf das Profilteil und das Blechteil verteilt werden.

Zweckmäßig wird die Verbindung zwischen Blechteil und Strangprofilteil nach Anspruch 5 durch Kleben hergestellt, um Spannungsspitzen, die bei Schweißnähten oder Nieten auftreten können, zu vermeiden. Schweißungen bei Aluminium führen zu einem Festigkeitsabfall in der Wärmeeinflußzone. Diese Bereiche wären im Crashfall stark rißgefährdet, so daß das Kleben vorzuziehen ist.

Anhand einer Zeichnung wird ein Ausführungsbeispiel der Erfindung mit weiteren Merkmalen, Einzelheiten und Vorteilen näher erläutert.

Es zeigen
- Fig. 1: einen Querschnitt durch eine erfindungsgemäße Verstärkung eines Blechteils mit einem Strangprofilteil,
- Fig. 2: eine Perspektivische Ansicht einer Verstärkung im Bereich eines hinteren Gurtanbindungspunkts in einem Kraftfahrzeug.

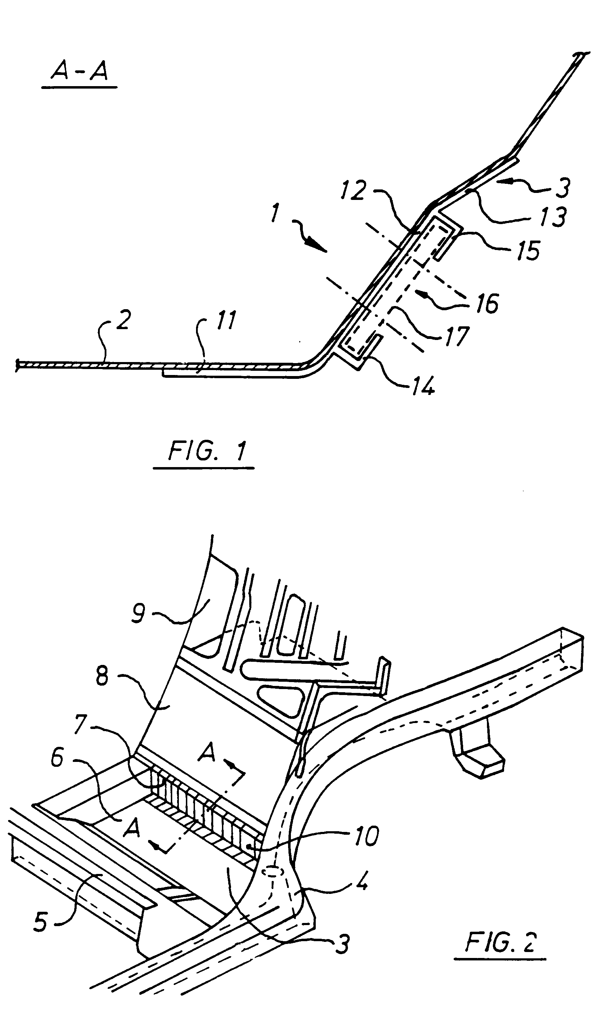

In Fig. 1 ist eine Verstärkungsanordnung 1 aus einem Blechteil 2 und einem Strangprofilteil 3 dargestellt. Fig. 1 stellt einen Ausschnitt aus einem Schnitt entlang der Linie A-A aus Fig. 2 dar. In Fig. 2 ist eine Perspektivische Teilansicht eines hinteren, unteren Karosseriebereichs eines Kraftfahrzeugs dargestellt, mit einem hinteren Längsträger 4, einem hinteren Sitzquerträger 5 und einem Teilausschnitt einer Bodenwanne 6 mit einem Anstieg 7 zu einer Schottwand 8 zu einem Kofferraumbereich 9.

Im Bereich 10, wo der hintere Längsträger 4 mit dem Anstieg 7 der Bodenwanne zusammentrifft, liegen etwa die hinteren Anbindungspunkte für einen Sicherheitsgurt.

Dieser Bereich ist wegen der im Belastungsfall hohen Spannungsspitzen durch das Strangprofilteil 3 zu verstärken. Dieses liegt von hinten und unten her (siehe Fig. 1) am Blechteil 2 bzw. der Bodenwanne 6 an und verläuft als Querträger etwa von der Innenseite der hinteren Längsträger bis zur Fahrzeugmitte. In Fig. 2 ist die Lage des Strangprofilteils 3 (liegt von der Rückseite her an) schraffiert eingezeichnet.

Aus der vergrößerten Darstellung der Fig. 1 ist zu ersehen, daß das Strangprofilteil 3 im Querschnitt etwa einen ersten geraden, plattenförmigen Profilteil 11 aufweist, der etwa waagrecht unter dem Blechteil 2 bzw. der Bodenwanne 6 anliegt. Mit einem zweiten Profilteil 12 liegt das Strangprofilteil 3 am Anstieg 7 der Bodenwanne 6 an, ebenso mit einem weiteren dritten Profilteil 13, der demgegenüber etwas in Richtung auf die Horizontale abgewinkelt ist. Am zweiten Profilteil 12 ist durch zwei Klauenprofile 14, 15 ein offener Haltekanal 16 gebildet, der die gesamte Breite des zweiten Profilteils 12 einnimmt.

In diesen Haltekanal 16 können eine (strichliert eingezeichnete) Mutternplatte 17 zur Befestigung des Sicherheitsgurtes und/oder andere Befestigungsmittel, beispielsweise für eine Tankbefestigung, eingeschoben und fixiert werden.

Durch die abgewinkelte Profilstruktur des Strangprofilteils 3 und die Klauenprofile 14, 15 wird eine hohe Biegesteifigkeit erreicht, so daß das Strangprofilteil im Fahrzeug als Querträger wirkt. Der Querträger kann bevorzugt über die gesamte Fahrzeugbreite von links nach rechts einstückig verlaufen; ggfs. ist jedoch auch eine Teilung etwa an einem mittleren Träger oder Tunnel möglich.

Ein solcher Querträger steift die aus Flächenteilen bestehende Umgebung aus (siehe Fig. 2), verbessert dadurch die lokale Steifigkeit und das Schwingungsverhalten. Die großflächige Kontaktfläche und die bevorzugte Verbindung durch Kleben senken auftretende Spanungsspitzen im Belastungsfall bei einer günstigen Krafteinleitung. Zudem wird bei der vorzugsweisen Verwendung von Aluminium-Strangprofilen der Korrosionsschutz verbessert. Durch integrierte Klauenprofile 14, 15 zu Haltekanälen 16 werden einfache Befestigungsmöglichkeiter für die Anbringung von Teilen, wie Sicherheitsgurten, Tankhalterungen, Sitzhalterungen, etc., zur Verfügung gestellt.

## Patentansprüche

1. Verstärkung eines Blechteils an einer Fahrzeugkarosserie durch ein zusätzlich damit verbundenes Bauteil, wobei
das Blechteil (2) in einer ersten Raumrichtung gerade verläuft und Biegungen nur in den anderen beiden Raumrichtungen aufweist,
an dem Blechteil (2) formschlüssig ein mit der Profillängsrichtung in der ersten Raumrichtung verlaufendes, dem Blechteil (2) entsprechend geformtes Verstärkungsteil (3) anliegt und
das Blechteil (2) und das Verstärkungsteil (3) verbunden sind,
dadurch gekennzeichnet,
daß das Blechteil (2) ein Teil einer Bodenwanne (6) eines Fahrzeugs im Bereich eines hinteren Gurtanbindungspunkts (10) ist,
daß das Verstärkungsteil ein Strangprofilteil (3) ist, das als quer zum Fahrzeug verlaufender Querträger ausgebildet ist und der den Bodenwannenbereich untergreift,
daß das Strangprofilteil (3) im Querschnitt einen ersten geraden, plattenförmigen Profilteil (11) aufweist, der etwa waagrecht unter dem Blechteil (2) der Bodenwanne (6) anliegt und
daß das Strangprofilteil (3) einen im Querschnitt nach oben abstehenden, zweiten Profilteil (12) aufweist, der am Anstieg (7) der Bodenwanne (6) zum Rücksitz bzw. zum Kofferraum anliegt.

2. Verstärkung eines Blechteils nach Anspruch 1, dadurch gekennzeichnet, daß an der Rückseite des zweiten Profilteils (12) durch zwei gegenüberliegende Klauenprofile (14, 15) ein offener Haltekanal (16) zur Aufnahme von Befestigungsteilen gebildet ist.

3. Verstärkung eines Blechteils nach Anspruch 1 oder 2, dadurch gekennzeichnet, daß der Haltekanal (16) die gesamte Breite des zweiten Profilteils (12) einnimmt.

4. Verstärkung eines Blechteils nach einem der Ansprüche 1 bis 3, dadurch gekennzeichnet, daß an dem zweiten Profilteil (12) ein weiterer dritter, plattenförmiger Profilteil (13) anschließt, der in Richtung auf die Horizontale abgewinkelt ist.

5. Verstärkung eines Blechteils nach einem der Ansprüche 1 bis 4, dadurch gekennzeichnet, daß das Blechteil (2) und das Strangprofilteil (3) an der Anlagefläche über eine Klebeschicht verklebt sind.

## Claims

1. Reinforcement for a sheet-metal part on a vehicle bodyshell by means of a part additionally joined thereto, where
the sheet-metal part (2) extends in a straight line in a first spatial dimension and has bends only in the other two dimensions,
a reinforcing part (3) which extends longitudinally with the profile in the first spatial dimension and is shaped to match the sheet-metal part (2) bears in a form-fit against the sheet-metal part (2), and
the sheet-metal part (2) and the reinforcing part (3) are connected,
characterised in that
the sheet-metal part (2) is part of a vehicle floorpan (6) in the region of a rear seatbelt attachment point (10),
the reinforcing part is an extruded profile section (3) in the form of a cross-member extending transverse to the vehicle and fitting under the floorpan region,
in cross-section the extruded profile section (3) incorporates a first straight, plate-shaped profile section (11) which rests more or less horizontally beneath the sheet-metal part (2) of the floorpan (6), and
the extruded profile section (3) incorporates a second profile section (12) which in cross-section protrudes upwards and which bears against the riser (7) of the floorpan (6) to the rear seat and luggage compartment.

2. Reinforcement for a sheet-metal part according to claim 1, characterised in that on the reverse of the second profile section (12) two opposing claw profiles (14, 15) form an open holding channel (16) for receiving fixings.

3. Reinforcement for a sheet-metal part according to claim 1 or 2, characterised in that the holding channel (16) occupies the entire width of the second profile section (12).

4. Reinforcement for a sheet-metal part according to any of claims 1 to 3, characterised in that adjoining the second profile section (12) is a further, third plate-shaped profile section (13) which is bent towards the horizontal.

5. Reinforcement for a sheet-metal part according to any of claims 1 to 4, characterised in that the sheetmetal part (2) and the extruded profile section (3) are bonded at the contact surface by means of an adhesive layer.

## Revendications

1. Renforcement d'une pièce en tôle sur une carrosserie d'automobile par un élément de construction fixé en plus à cette pièce,
la pièce en tôle (2) s'étendant en ligne droite dans une première direction de l'espace et ne présentant des courbures que dans les deux autres directions de l'espace,
un élément de renforcement (3), qui s'étend, par la direction longitudinale du profilé qui le constitue, dans ladite première direction dans l'espace et qui a une forme correspondant à celle de la pièce en tôle (2), étant appliqué étroitement contre ladite pièce en tôle (2), et
la pièce en tôle (2) et l'élément de renforcement (3) étant assemblés,
caractérisé
en ce que la pièce en tôle (2) fait partie d'une cuvette (6) du plancher d'une voiture dans la région du point d'attache arrière (10) d'une ceinture,
en ce que l'élément de renforcement est un élément profilé filé (3) qui est réalisé sous forme de traverse s'étendant transversalement par rapport à la voiture et qui est sous-jacent à la région de la cuvette du plancher,
en ce que l'élément profilé filé (3) présente, vu en coupe transversale, une première partie de profilé (11), rectiligne en forme de plaque, qui est appliquée à peu près horizontalement sous la pièce en tôle (2) de la cuvette (6) du plancher, et
en ce que l'élément profilé filé (3), vu en coupe transversale, présente une deuxième partie de profilé (12) qui s'écarte vers le haut et qui est appliquée contre la paroi montante (7) de la cuvette (6) du plancher vers le siège arrière ou vers le coffre à bagages.

2. Renforcement d'une pièce en tôle selon la revendication 1, caractérisé en ce que, sur la face arrière de la deuxième partie de profilé (12), deux profils en ailes coudées opposées (14, 15) forment une gouttière ouverte de retenue (16) destinée à recevoir des éléments de fixation.

3. Renforcement d'une pièce en tôle selon la revendication 1 ou 2, caractérisé en ce que la gouttière de retenue (16) occupe toute la largeur de la deuxième partie de profilé (12).

4. Renforcement d'une pièce en tôle selon l'une quelconque des revendications 1 à 3, caractérisé en ce qu'à la deuxième partie de profilé (12) fait suite une troisième partie de profilé (13) en forme de plaque qui est coudée en direction de l'horizontale.

5. Renforcement d'une pièce en tôle selon l'une quelconque des revendications 1 à 4, caractérisé en ce que la pièce en tôle (2) et l'élément profilè filé (3) sont collés par une couche de colle sur leur face de contact.
